# EUROPÄISCHE PATENTSCHRIFT

(11) **EP 3 851 809 B1**
(45) Veröffentlichungstag und Bekanntmachung des Hinweises auf die Patenterteilung: **23.10.2024**
(21) Anmeldenummer: 21151552.3
(22) Anmeldetag: 14.01.2021
(51) Int. Cl.: G01F 1/00, G05B 19/43

(54) **FLUIDSTRÖMUNGSMESSEINRICHTUNG, BEARBEITUNGSMASCHINE MIT FLUIDSTRÖMUNGSMESSEINRICHTUNG, STEUERUNGS- UND/ODER REGELUNGSEINRICHTUNG SOWIE VERFAHREN**
FLUID FLOW MEASURING DEVICE, PROCESSING MACHINE WITH FLUID FLOW MEASURING DEVICE, CONTROL AND / OR REGULATING DEVICE AND METHOD
DISPOSITIF DE MESURE DE L'ÉCOULEMENT DE FLUIDE, MACHINE DE TRAITEMENT POURVU DE DISPOSITIF DE MESURE DE L'ÉCOULEMENT DE FLUIDE, DISPOSITIF DE COMMANDE ET/OU DE RÉGULATION AINSI QUE PROCÉDÉ

(30) Priorität: 16.01.2020 DE 102020100928
(43) Veröffentlichungstag der Anmeldung: 21.07.2021
(73) Patentinhaber: HOMAG GmbH, 72296 Schopfloch (DE)
(72) Erfinder: Kanitz, Carsten, 72108 Rottenburg (DE); Rieger, Harald, 72178 Waldachtal (DE)
(74) Vertreter: Hoffmann Eitle

(56) Entgegenhaltungen:
- EP-A2- 3 165 327
- DE-B3- 102018 004 587
- GB-A- 2 273 161

## Beschreibung

### Technisches Gebiet

Die vorliegende Erfindung betrifft eine Fluidströmungsmesseinrichtung zur Bewertung einer gasförmigen Fluid-strömung, eine Bearbeitungsmaschine, die eine solche Fluidströmungseinrichtung aufweist, sowie eine Steuerungs- und/oder Regelungseinrichtung zur Steuerung und/oder Regelung einer Absaugvorrichtung, die zumindest eine vorgenannte Bearbeitungsmaschine mit einer Absaugfluidströmung versorgt.

Ferner betrifft die vorliegende Erfindung ein Verfahren zur Bewertung und/oder Überwachung einer gasförmigen Fluidströmung. Durch die Strömung werden bspw. bei der Bearbeitung mit einem Bearbeitungswerkzeug oder - aggregat anfallende Späne oder Ähnliches abgeführt. Die im Rahmen der vorliegenden Anmeldung zu bearbeitenden Werkstücke sind Bauteile wie rein beispielhaft Massivholz- oder Spanplatten, MDF-Platten, Verbundmaterialwerkstücke, oder Ähnliches, die in der Möbel- und Bauelementeindustrie zum Einsatz kommen.

### Hintergrund

Bei Bearbeitungsmaschinen für Bauteile aus dem Bereich der Möbel- und Bauelementeindustrie werden immer neue und höhere Anforderungen an die Sicherheit gestellt, unter anderem in Bezug auf die Absaugung der während der Bearbeitung entstehenden Restmaterialien wie Späne und (Holz-)staub. Gleichzeitig werden an holzverarbeitende Betriebe, insbesondere in Bezug auf die eingesetzten Bearbeitungsmaschinen, immer höhere Anforderungen an die Energieeffizienz und somit Umweltbelastung gestellt. Dabei wird einerseits gefordert, dass eine ausreichend hohe Absaugleistung zur Verfügung gestellt wird, sodass sichergestellt werden kann, dass an den jeweiligen Bearbeitungsmaschinen Feinstaubgrenzwerte eingehalten werden. Andererseits wird verlangt, dass die geforderte Absaugleistung mit minimalem Energieeinsatz erreicht wird, sowie die dadurch entstehende Lärmbelastung vorgeschriebene Grenzwerte nicht überschreitet.

Hierzu wird einerseits im Stand der Technik bereits vorgeschlagen, dass die Absauganlage nur dann läuft, wenn auch die Bearbeitungsmaschine läuft. Andererseits wird vorgeschlagen, die Absaugleistung, insbesondere den zur Verfügung gestellten Volumenstrom, entsprechend der Partikelbelastung des Absaugkanals oder nahe am Arbeitsbereich zu steuern. Hierzu ist es jedoch notwendig, aufwendige Messeinrichtungen wie beispielsweise optische Sensoren vorzusehen, welche durch abgelagerte Partikel in ihrer Überwachungsfunktion erheblich beeinträchtigt werden. Die Zugänge und Funktionsflächen der Sensoren werden durch die abgelagerten Partikeln zugesetzt, sodass kein verwertbares und/oder verlässliches Signal von einem Sensor der Messeinrichtung ausgegeben werden kann. Dies führt zu erhöhten Maschinenstillstandzeiten durch Notabschaltungen aufgrund von fehlerhaft erkannter unzureichender Absaugleistung und damit zu einer Verringerung der Produktivität. Ferner ist die dadurch erzielbare Energieeinsparung eher geringfügig.

So beschreibt die EP 3 165 327 A2 eine Bearbeitungsmaschine aufweisend einen durchströmten Rohrabschnitt, der eine gasförmige Fluidströmung führt, einen außerhalb des durchströmten Rohrabschnitts angeordneten Sensor zur Erfassung von Schwingungen im Bereich des Rohrabschnitts und eine Steuereinheit, die eingerichtet ist, eine Schwingungsanalyse eines Signals des Sensors durchzuführen und basierend auf dem Ergebnis der Schwingungsanalyse einen Zusammenhang zwischen dem Signal des Sensors und einem Volumenstrom der gasförmigen Fluidströmung innerhalb des Rohrabschnitts herzustellen.

Der bekannte Stand der Technik kann die gesteigerten Anforderungen in Bezug auf eine minimale Feinstaubbelastung bei gleichzeitig minimalem Energieeinsatz nur bedingt erfüllen und führt ggf. zu einer reduzierten Produktivität sowie erhöhten Betriebskosten. Deshalb kann der Stand der Technik die stetig steigenden Leistungsanforderungen bezüglich der Ausbringung und Wirtschaftlichkeit der Gesamtanlage nicht mehr wie gefordert umsetzen und ist aus diesem Grund nicht zukunftsträchtig.

### Gegenstand der Erfindung

Es ist deshalb Aufgabe der vorliegenden Erfindung, eine Fluidströmungsmesseinrichtung, eine Bearbeitungsmaschine, eine Steuerungs/Regelungseinrichtung und ein Verfahren zur Bewertung einer gasförmigen Fluidströmung einer Bearbeitungsmaschine zu schaffen, die die bekannten Probleme aus dem Stand der Technik beheben können. Bevorzugt sollen eine hohe Zuverlässigkeit hinsichtlich zumindest der qualitativen Bewertung einer Fluidströmung (Absaugfluidströmung/Blasluftströmung) gewährleistet und eine hohe Produktivität der Bearbeitungsmaschine bei konstruktiv einfacher Gestaltung der Fluidströmungsmesseinrichtung sowie hoher Energieeffizienz gewährleistet sein.

Diese Aufgabe wird gelöst durch eine Fluidströmungsmesseinrichtung nach Anspruch 1, eine Bearbeitungsmaschine nach Anspruch 6 sowie ein Verfahren nach Anspruch 12.

Bevorzugte Weiterbildungen der Erfindung sind in den abhängigen Ansprüchen angegeben, wobei der Gegenstand der die Fluidströmungsmesseinrichtung betreffenden Ansprüche im Rahmen der Bearbeitungsmaschine sowie dem Verfahren zum Einsatz kommen kann und umgekehrt

Hierbei ist einer der Grundgedanken der vorliegenden Offenbarung, dass bevorzugt außerhalb eines Gehäuses, durch das eine zu bewertende gasförmige Fluidströmung (Absaugfluidströmung/Blasluftströmung) geleitet wird, eine Sensoreinheit angeordnet ist, welche mittels zumindest einer Messtelle, die an dem durchströmten Gehäuse angeordnet oder vorgesehen ist, die gasförmige Fluidströmung erfasst wird.

Gemäß einem Aspekt der vorliegenden Offenbarung weist eine Fluidströmungsmesseinrichtung zur Bewertung einer gasförmigen, insbesondere partikelbehafteten, Fluidströmung, insbesondere Absaugfluidströmung oder Blasluftströmung, einer Bearbeitungsmaschine, welche zur Bearbeitung von bevorzugt plattenförmigen Werkstücken, welche insbesondere zumindest teilweise aus Holz, Holzwerkstoffen, Holzersatzwerkstoffen, Kunststoff(en), Verbundmaterial(ien) oder dergleichen bestehen, dient, zumindest ein durchströmtes ringförmiges Gehäuse, welches auch rechteckförmig oder polygonförmig sein kann, zum Führen einer gasförmigen Fluidströmung, das dazu eingerichtet ist, in einen strömungsführenden Strang, insbesondere einen Absaugstrang oder einen Blasluftstrang, der Bearbeitungsmaschine implementiert zu werden, zumindest eine, bevorzugt zwei, Messstelle(n), die an dem durchströmten Gehäuse vorgesehen ist, und eine außerhalb des durchströmten Gehäuses angeordnete Sensoreinheit zur Erfassung der gasförmigen Fluidströmung mittels der zumindest einen Messstelle, wobei die Sensoreinheit ein Differenzdrucksensor, ein Flügelradsensor, ein Vortexsensor (Wirbelzähler), ein thermischer Sensor (Hitzdraht-Anemometer), ein Ultraschallsensor oder zwei Drucksensoren ist. Hierbei ist die zumindest eine Messstelle als Ausnehmung, insbesondere Durchgangsbohrung, ausgebildet, welche die Innenseite des die gasförmige Fluidströmung führenden Gehäuses (20) mit der Außenseite des Gehäuses (20) verbindet, insbesondere druck- und/oder strömungsführend verbindet. Mit anderen Worten, die Ausnehmung durchdringt das bevorzugt ringförmige Gehäuse von der Außenseite zur Innenseite. Hierbei ist insbesondere wichtig, dass eine Information über den Zustand der durch das Gehäuse strömenden Fluidströmung, wie z.B. der vorherrschende Druck, nach außen geleitet werden kann. Hierbei ist die zumindest eine Messstelle als eine Vielzahl von Ausnehmungen ausgebildet, die bevorzugt um den Umfang des Gehäuses verteilt angeordnet sind.

Die Fluidströmung wird bspw. zur Absaugung der während der Bearbeitung entstehenden Restmaterialien wie Späne und Holzstaub genutzt. Eine solche Fluidströmung ist im Allgemeinen eine gasförmige, insbesondere eine partikelbeladene-gasförmige, Fluidströmung, die beispielsweise von der Bearbeitungsmaschine zu einer Absaugeinrichtung strömt. Bevorzugter Weise umfasst die Bearbeitungsmaschine ein spanendes Bearbeitungswerkzeug bzw. Bearbeitungsaggregat, wie einen Fräser bzw. ein Fräsaggregat.

Bei der (partikelbeladenen) gasförmigen Fluidströmung kann es sich in einem konkreten Beispiel um (Absaug-)Luft handeln, mit der Bearbeitungsreste wie Späne oder Staub gefördert werden. Es kann sich jedoch bei der Fluidströmung auch um Blasluft handeln, die zum Entfernen von Spänen oder Staub während und nach der Bearbeitung von Werkstücken verwendet wird.

Ferner wird die Sensoreinheit im Falle von Drucksensoren und/der Differenzdrucksensoren bevorzugt außerhalb des Gehäuses angeordnet, wohingegen diese im Falle von Flügelradsensoren, Vortexsensoren (Wirbelzählern), oder thermischen Sensoren (Hitzdraht-Anemometer) bevorzugt innerhalb des Gehäuses vorgesehen wird.

Ferner ist es vorteilhaft, wenn die Fluidströmungsmesseinrichtung zumindest zwei in Strömungsrichtung der gasförmigen Fluidströmung in etwa hintereinander angeordnete Messtellen an dem Gehäuse aufweist.

Weiterhin ist es bevorzugt, wenn die Sensoreinheit in einer Strömungsführungseinrichtung, insbesondere einer Fluidleitung, welche die beiden Messstellen, insbesondere die beiden Ausnehmungen bzw. Durchgangsbohrungen, druck- und/oder strömungsführend miteinander verbindet, angeordnet ist, bevorzugt druck- und/oder strömungsführend angeordnet ist.

Auf diese Weise ist es möglich, anhand eines einfachen Druckdifferenzsensors die durch das Gehäuse geführte Fluidströmung zu erfassen, insbesondere einen Differenzdruck zwischen den beiden Messstellen zu erfassen.

Hierbei kann in vorteilhafter Weise bevorzugt in Strömungsrichtung vor der zumindest einen Messtelle oder zwischen den beiden Messstellen im Inneren des Gehäuses eine Störkontur, beispielsweise eine Blende oder eine Engstelle, vorgesehen sein, die dazu eingerichtet ist, die Strömung der Fluidströmung zu beeinflussen, beispielsweise indem der strömungsführende Querschnitt des Gehäuses reduziert wird. Mit anderen Worten stellt beispielsweise die Blende eine abschnittsweise Verjüngung bzw. Reduzierung des Innendurchmessers des ringförmigen Gehäuses dar. Hierbei ist es nicht notwendig, dass die Störkontur über den kompletten Innenumfang des Gehäuses vorgesehen ist. Ferner kann die Störkontur auch durch eine Vertiefung in der Innenwand ausgebildet werden.

Des Weiteren ist es bevorzugt, dass die beiden Messstellen als eine Vielzahl von Ausnehmungen, insbesondere Durchgangsbohrungen, ausgebildet sind, die bevorzugt um den Umfang des Gehäuses verteilt, insbesondere gleichmäßig verteilt, angeordnet und vorzugsweise miteinander verbunden sind.

Auf diese Weise ist es möglich, die Fluidströmung an mehreren Stellen verteilt über einen Innenumfang des Gehäuses zu erfassen und somit die Erfassungsgenauigkeit zu steigern sowie die Störungsanfälligkeit aufgrund von Verschmutzung zu reduzieren.

Gemäß einer weiteren Ausführungsform weist die Fluidströmungsmesseinrichtung ferner eine Blasluftvorrichtung auf, die dazu eingerichtet ist, zumindest eine der zwei Messtellen mit Druckluft zu versorgen, insbesondere an die Ausnehmung, insbesondere Durchgangsbohrung, der jeweiligen Messstelle Druckluft anzulegen, wobei die Druckluft bevorzugt mittels eines Ventils bzw. Steuerventils zuschaltbar und/oder steuerbar ist.

Ferner ist es vorteilhaft, wenn ein weiteres Ventil vorgesehen ist, mittels dessen der bzw. die Sensor(en) der Sensoreinheit von Druckluft der Blasluftvorrichtung getrennt und somit geschützt werden können.

Des Weiteren ist es vorteilhaft, wenn die Fluidströmungsmesseinrichtung eine Volumenstromänderungs-vorrichtung, insbesondere eine (mechanisch) verstell- und/oder regelbare Durchflussblende oder eine (mechanisch) verstell- und/oder regelbare Drosselklappe, zur Steuerung und/oder Regelung des Volumenstroms der durch das Gehäuse geführten gasförmigen Fluidströmung, aufweist. Hierbei kann die Volumenstromänderungsvorrichtung in Strömungsrichtung vor, zwischen oder hinter der zumindest einen oder den beiden Messstellen vorgesehen werden.

Vorzugsweise weist die Fluidströmungsmesseinrichtung eine Partikelerfassungsvorrichtung auf, die dazu eingerichtet ist, die Anzahl und/oder Konzentration der Partikel wie Späne und Holzstaub, die in der durch das Gehäuse geführten gasförmigen Fluidströmung vorhanden sind, zu erfassen.

Auf diese Weise wird es ermöglicht, die Fluidströmung nicht nur basierend auf dem vorliegenden Durchfluss zu beurteilen, sondern auch die in der Fluidströmung vorherrschende Partikelkonzentration mit in die Beurteilung einfließen zu lassen.

Gemäß einer weiteren Ausgestaltung der vorliegenden Erfindung weist die Fluidströmungsmesseinrichtung eine Steuerungs- und/oder Regelungseinrichtung auf, die dazu eingerichtet ist, mittels eines Ausgangssignals der Sensoreinheit einen Volumenstrom der gasförmigen Fluidströmung zu ermitteln und/oder mittels eines Ausgangssignals der Partikelerfassungsvorrichtung einen Erfassungsgrad bzw. einen Verschmutzungsgrad der gasförmigen Fluidströmung zu ermitteln, und basierend auf dem Volumenstrom und/oder dem Erfassungsgrad bzw. Verschmutzungsgrad die gasförmige Fluidströmung zu bewerten.

Hierbei ist es ferner vorteilhaft, wenn die Sensoren als sogenannte "Smart-Sensoren" ausgeführt sind, welche ohne eine Steuerung direkt Steuerungs- und/oder Regelungssignale ausgeben können. D.h. eine dezentrale Steuerung und/oder Regelung durchführen können.

Die Steuerungs- und/oder Regelungseinrichtung zeichnet sich ferner dadurch aus, dass sie dazu eingerichtet ist, mittels dem ermittelten Volumenstrom und/oder dem ermittelten Erfassungsgrad bzw. Verschmutzungsgrad die Volumenstrom-änderungsvorrichtung zu steuern und/oder zu regeln, insbesondere entsprechend eines voreingestellten Betriebsmodus, beispielsweise Eco-, Normal- oder High-Modus, zu steuern und/oder zu regeln.

Hierbei ist im Sinne der vorliegenden Erfindung unter "Eco-Modus" zu verstehen, dass beispielsweise die Absaugleistung der Absaugeinheit auf einem minimalen Niveau gehalten werden soll. Hierzu ist es jedoch notwendig, eine sehr feine bzw. genaue Steuerung und/oder Regelung der Absaugluft zu realisieren, um sicherzustellen, dass eine ausreichende Abführung der Schmutzpartikel wie Späne gewährleistet ist.

Des Weiteren betrifft die vorliegende Erfindung eine Bearbeitungsmaschine zur Bearbeitung von bevorzugt plattenförmigen Werkstücken, welche insbesondere zumindest teilweise aus Holz, Holzwerkstoffen, Holzersatzwerkstoffen, Kunststoff(en), Verbundmaterial(ien) oder dergleichen bestehen, aufweisend zumindest eine erfindungsgemäße Fluidströmungsmesseinrichtung, bei der die Fluidströmungsmesseinrichtung in einen strömungsführenden Strang, insbesondere einen Absaugstrang und/oder einen Blasluftstrang, der Bearbeitungsmaschine implementiert ist, wobei die Bearbeitungsmaschine ferner eine Steuerungs- und/oder Regelungseinrichtung zur Steuerung und/oder Regelung der Fluidströmungsvorrichtung.

Gemäß einer Ausführungsform der vorliegenden Erfindung ist die Steuerungs- und/oder Regelungseinrichtung eine Hauptsteuerungseinrichtung der Bearbeitungsmaschine, wobei die Steuerungs- und/oder Regelungseinrichtung bevorzugt dazu eingerichtet ist, die ermittelten Werte und/oder Bewertungsergebnisse zu visualisieren, überwachen, abspeichern und/oder an einen Cloud-Server zu übermitteln.

Ferner ist es bevorzugt, wenn die Steuerungs- und/oder Regelungseinrichtung dazu eingerichtet ist, den ermittelten Volumenstrom mit einem voreingestellten Soll-Volumenstrom und/oder den ermittelten Erfassungsrad bzw. Verschmutzungs-grad mit einem voreingestellten Maximal-Erfassungsgrad bzw. Maximal-Verschmutzungsgrad zu vergleichen, und wenn der ermittelte Volumenstrom unterhalb dem Soll-Volumenstrom liegt und/oder der ermittelte Erfassungsgrad bzw. Verschmutzungsgrad oberhalb dem Maximal-Erfassungsgrad bzw. dem Maximal-Verschmutzungsgrad liegt, die Steuereinrichtung zumindest eine Aktion aus der Gruppe: Warnsignal ausgeben, Information und/oder Warninformation an einen Cloud-Server übermitteln, Notabschaltung und/oder Einschalten, Regelsignale an eine Steuerungs- und/oder Regelungseinrichtung einer Absaugvorrichtung, einzelne Ventile der Absaugvorrichtung, eine Blasluftvorrichtung und/oder eine Bearbeitungsmaschine senden, Regelsignale an die Volumenstromänderungsvorrichtung senden und dergleichen, ausführt.

Des Weiteren ist es vorteilhaft, dass die Steuerungs- und/oder Regelungseinrichtung dazu eingerichtet ist, basierend auf einem gewählten Betriebsmodus, beispielsweise Eco-, Normal- oder High-Modus, und/oder basierend auf mindestens einem der nachfolgenden Bearbeitungsparameter: Bearbeitungsvorgang, Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Hilfsstoffe und dergleichen, Oberflächengüte, Werkzeugstandzeit, Maschinenparametern und/oder Produktionsparametern einen Soll-Volumenstrom und/oder einen Maximal-Verschmutzungsgrad zu ermitteln.

Des Weiteren ist es vorteilhaft, wenn die Steuerungs- und/oder Regelungseinrichtung dazu eingerichtet ist, mittels eines Ausgangssignals der Sensoreinheit einen Volumenstrom der gasförmigen Fluidströmung zu ermitteln und/oder mittels eines Ausgangssignals der Partikelerfassungsvorrichtung einen Erfassungsgrad bzw. Verschmutzungsgrad der gasförmigen Fluidströmung zu ermitteln, und basierend auf dem Volumenstrom und/oder dem Erfassungsgrad bzw. Verschmutzungsgrad die gasförmige Fluidströmung zu bewerten.

Gemäß einer weiteren Ausführungsform der vorliegenden Erfindung ist die Steuerungs- und/oder Regelungseinrichtung ferner dazu eingerichtet, mittels dem ermittelten Volumenstrom und/oder dem ermittelten Erfassungsgrad bzw. Verschmutzungsgrad und/oder dem Bewertungsergebnis den aktuellen bzw. tatsächlichen Volumenstrom (Ist-Volumenstrom) und/oder eine aktuelle bzw. tatsächliche Absaugleistung (Ist-Absaugleistung) der Absaugvorrichtung und/oder eine aktuelle bzw. tatsächliche Blasluftleistung der Blasluftvorrichtung und/oder eine aktuelle bzw. tatsächliche Bearbeitungsleistung (Ist-Bearbeitungsleistung) der Bearbeitungsmaschine zu steuern, insbesondere entsprechend eines voreingestellten Betriebsmodus, beispielsweise Eco-, Normal- oder High-Modus, zu steuern und/oder zu regeln.

Des Weiteren ist es vorteilhaft, wenn die Fluidströmungsvorrichtung, insbesondere die Absaugvorrichtung und/oder die Blasluftvorrichtung, zumindest zwei jeweils von einer gasförmigen Fluidströmung durchströmbare Kanäle aufweist, die bevorzugt jeweils einem Absaugstrang einer Bearbeitungsmaschine entsprechen, und in denen jeweils eine Fluidströmungsmesseinrichtung angeordnet oder implementiert ist, wobei die Steuerungs- und/oder Regelungseinrichtung bevorzugt dazu eingerichtet ist, basierend auf zumindest zwei ermittelten Volumenströmen und/oder zumindest zwei ermittelten Erfassungsgrad bzw. Verschmutzungsgraden und/oder zumindest zwei ermittelten Bewertungsergebnissen die aktuellen bzw. tatsächlichen Volumenströme (Ist-Volumenströme) und/oder die aktuellen bzw. tatsächlichen Absaugleistungen (Ist-Absaugleistungen) und/oder die aktuelle bzw. tatsächliche Blasluftleistung der Fluidströmungsvorrichtungen, insbesondere der Absaugvor-richtungen und/oder der Blasluftvorrichtungen, und/oder die aktuellen bzw. tatsächlichen Bearbeitungsleistungen (Ist-Bearbeitungsleistungen) der einzelnen Bearbeitungsmaschine bzw. der Bearbeitungsmaschinen zu steuern und/oder zu regeln, insbesondere entsprechend eines voreingestellten Betriebsmodus, beispielsweise Eco-, Normal- oder High-Modus, der jeweiligen Bearbeitungsmaschine zu steuern und/oder zu regelen.

Des Weiteren betrifft die vorliegende Erfindung ein Verfahren zur Bewertung und/oder Überwachung einer gasförmigen Fluidströmung, insbesondere einer Absaugfluidströmung und/oder einer Blasluftströmung, einer Bearbeitungsmaschine, welche bevorzugt zur Bearbeitung von Werkstücken, welche insbesondere zumindest teilweise aus Holz, Holzwerkstoffen, Holzersatzwerkstoffen, Kunststoff(en), Verbundmaterial(ien) oder dergleichen bestehen, dient, das nachfolgende Schritte aufweist: Führen einer gasförmigen Fluidströmung durch ein bevorzugt ringförmiges Gehäuse, insbesondere eine Absaugfluidströmung und/oder eine Blasluftströmung, einer Bearbeitungsmaschine, und Erfassen der gasförmigen Fluidströmung mittels einer außerhalb des durchströmten Gehäuses angeordneten Sensoreinheit über zumindest eine am ringförmigen Gehäuse angeordneten Messtelle, wobei die Erfassung bevorzugt mittels der erfindungsgemäßen Fluidströmungsmesseinrichtung erfolgt. Die Sensoreinheit ein Differenzdrucksensor, ein Flügelradsensor, ein Vortexsensor, ein thermischer Sensor, ein Ultraschallsensor oder zwei Drucksensoren ist, und wobei die zumindest eine Messstelle als Ausnehmung ausgebildet ist, welche die Innenseite des die gasförmige Fluidströmung führenden Gehäuses mit der Außenseite des Gehäuses verbindet, wobei die zumindest eine Messtelle als eine Vielzahl von Ausnehmungen ausgebildet ist, die bevorzugt um den Umfang des Gehäuses verteilt angeordnet sind.

Gemäß einer weiteren Ausgestaltung der vorliegenden Erfindung weist das Verfahren zur Bewertung und/oder Überwachung einer Fluidströmung ferner den Schritt auf: Ermitteln eines Volumenstroms der gasförmigen Fluidströmung basierend auf einem Ausgangssignal der Sensoreinheit, und/oder Ermitteln eines Erfassungsgrads und/oder eines Verschmutzungsgrads der gasförmigen Fluidströmung basierend auf einem Ausgangssignal einer Partikelerfassungsvorrichtung.

Des Weiteren ist es bevorzugt, wenn das Verfahren zur Bewertung und/oder Überwachung ferner den Schritt aufweist: Bewerten der gasförmigen Fluidströmung basierend auf dem erfassten Volumenstrom und/oder dem erfassten Erfassungsgrad bzw. Verschmutzungsgrad, wobei bevorzugt bewertet wird, ob die gasförmige Fluidströmung in einem Normbereich oder einem abnormalen Bereich liegt. D.h., ob ein zu geringer bzw. zu großer Volumenstrom und/oder eine zu große bzw. zu kleine Partikelkonzentration bzw. Partikelanzahl vorherrscht.

Ferner ist es vorteilhaft, wenn bei dem Verfahren zur Bewertung und/oder Überwachung einer gasförmigen Fluidströmung, insbesondere einer Absaugfluidströmung und/oder Blasluftströmung, einer Bearbeitungsmaschine die aktuelle bzw. tatsächliche Absaugleistung (Ist-Absaugleistung) einer kompletten Absauganlage/Absaug-vorrichtung und/oder die aktuelle bzw. tatsächliche Absaugleistung (Ist-Absaugleistung) eines Absaugstrangs einer einzelnen Bearbeitungsmaschine, und/oder die Blasluftleistung einer kompletten Blasluftvorrichtung und/oder eines einzelnen Blasluftstrangs einer Bearbeitungsmaschine, und/oder der aktuelle bzw. tatsächliche Volumenstrom (Ist-Volumenstrom) der kompletten Absauganlage/Absaugvorrichtung und/oder der aktuelle bzw. tatsächliche Volumenstrom (Ist-Volumenstrom) eines Absaugstrangs einer einzelnen Bearbeitungsmaschine, und/oder die aktuelle bzw. tatsächliche Bearbeitungsleistung (Ist-Bearbeitungsleistung) der Bearbeitungsmaschine, in Abhängigkeit von zumindest einem der nachfolgenden Faktoren gesteuert und/oder reguliert wird: ermittelter Volumenstrom, ermittelter Erfassungsgrad bzw. Verschmutzungsgrad, Betriebsmodus der einzelnen Bearbeitungsmaschine, wie z.B. Eco-, Normal- oder High-Modus, Bearbeitungsparameter: Bearbeitungsvorgang, Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Hilfsstoffe und dergleichen, Oberflächengüte, Werkzeugstandzeit, Maschinenparametern und/oder Produktionsparametern und dergleichen.

### Kurze Beschreibung der Figuren

Fig. 1 zeigt eine schematische isometrische Ansicht einer Fluidströmungsmesseinrichtung einer ersten Ausführungsform der vorliegenden Erfindung,
Fig. 2 zeigt eine schematische Halbschnittdarstellung der in Fig. 1 dargestellten Fluidströmungsmesseinrichtung,
Fig. 3 zeigt eine schematische Schnittdarstellung einer Fluidströmungsmesseinrichtung einer weiteren Ausführungsform der vorliegenden Erfindung, und
Fig. 4 zeigt schematisch den Aufbau einer Steuerungseinrichtung zur Steuerung und/oder Regelung einer Absaugvorrichtung gemäß einer Ausführungsform der vorliegenden Erfindung.

### Detaillierte Beschreibung der bevorzugten Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um weitere Ausführungsformen auszubilden.

Dabei sind in den verschiedenen Figuren gleiche oder entsprechende Elemente jeweils mit den gleichen oder ähnlichen Bezugszeichen bezeichnet.

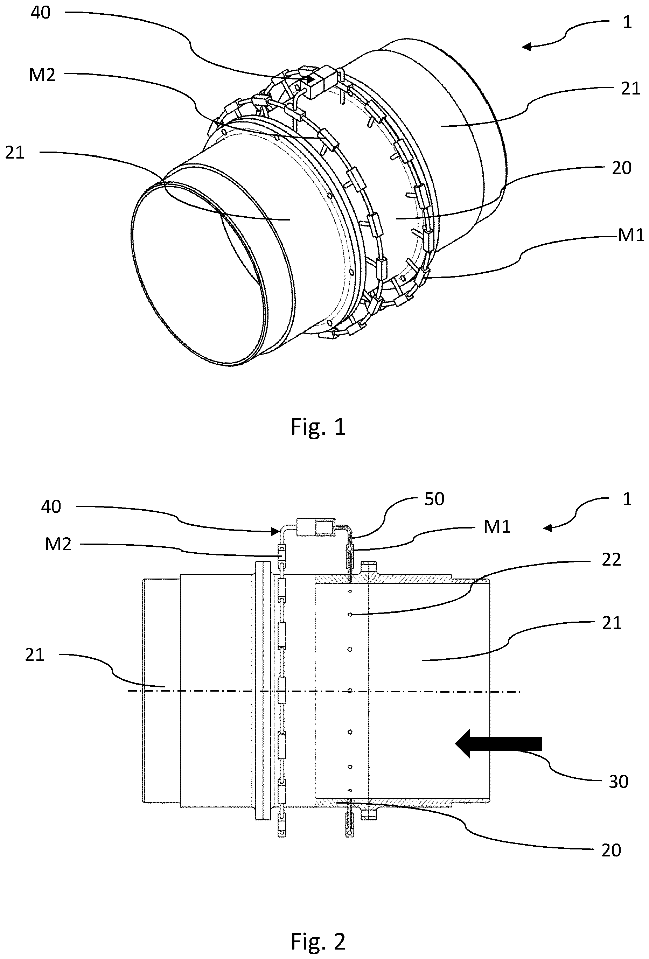

Figur 1 zeigt eine schematische isometrische Ansicht einer Fluidströmungsmesseinrichtung einer ersten Ausführungsform der vorliegenden Erfindung. Figur ein zeigt eine Ausführungsform mit zwei Messtellen M1, M2. Die dargestellte Fluidströmungsmesseinrichtung 1 besteht aus einem ringförmigen Gehäuse 20, insbesondere einem Rohr, das an beiden Enden jeweils mit einem Flansch versehen ist. Mittels der beiden Flansche ist das Gehäuse 20 in einen strömungsführenden Strang 21 eingebunden, hierbei kann es sich um ein starres Absaugrohr oder einen flexiblen Absaugschlauch einer Absaugvorrichtung 100 handeln. Der strömungsführende Strang bzw. Absaugstrang kann dazu dienen, eine Bearbeitungsmaschine 10 in eine zentrale Absaugvorrichtung 100 einer Fertigungshalle einzubinden und damit die Bearbeitungsmaschine 10 mit einer erforderlichen Absaugluft zu versorgen. Auf diese Weise können während der Bearbeitung eines Werkstücks entstehende Späne oder Staub abgesaugt, abtransportiert und zentral gesammelt werden.

In der dargestellten Ausführungsform sind die beiden Messstellen M1 und M2 jeweils durch eine Vielzahl von Durchgangsbohrungen 22 ausgebildet, die um den Umfang des ringförmigen Gehäuses 20 gleichmäßig verteilt angeordnet sind. Die Durchgangsbohrungen 22 sind jeweils mit Gewinden versehen, in welche beispielsweise Druckluftarmaturen eingeschraubt werden können, über die mittels Strömungsführungseinrichtungen 50 (Druckluftleitungen oder Druckluftschläuche) die Vielzahl von Durchgangsbohrungen 22 zu einem Ring verbunden werden können. Entsprechend weist die gezeigte Fluidströmungsmesseinrichtung 1 zwei geschlossene Fluidströmungsstränge auf, die an zwei sich gegenüberliegenden Seiten mit einer Sensoreinheit 40 verbunden sind. Auf diese Weise ist es möglich, eine Information, z.B. den vorliegenden Druck, über die in dem Gehäuse 20 geführte gasförmige Fluidströmung 30, an zwei in Strömungsrichtung der gasförmigen Fluidströmung hintereinander angeordneten Messstellen M1, M2 an dem Gehäuse zu gewinnen und an die Sensoreinheit 40 weiterzuleiten.

Figur 2 zeigt eine schematische Halbschnittdarstellung der in Fig. 1 dargestellten Fluidströmungsmesseinrichtung und dient der weiteren Veranschaulichung der Fluidströmungsmesseinrichtung 1 gemäß der vorliegenden Ausführungsform. Wie oben bereits beschrieben, weist die Fluidströmungsmesseinrichtung 1 zwei Messtellen M1, M2 auf, wobei die erste Messtelle M1 in Strömungsrichtung (schwarzer Pfeil) vor der zweiten Messtelle M2 in dem Gehäuse 20 angeordnet ist. Die beiden Messtellen M1, M2 bestehen jeweils aus einer Vielzahl von Durchgangsbohrungen 22, die in Strömungsrichtung in etwa auf gleicher Höhe umlaufend angeordnet sind. Auf diese Weise kann an zwei Stellen in dem Gehäuse 20 die durch das Gehäuse 20 geführte Strömung abgegriffen werden. In der dargestellten Ausführungsform wird mittels Strömungsführungseinrichtungen 50, die als Rohrleitungen ausgebildet sind, die abgegriffene Strömung an die Sensoreinheit 40 weitergeleitet, welche in der vorliegenden Ausführungsform als ein Differenzdrucksensor ausgebildet ist, welcher die beiden an den Messtellen M1, M2 anliegenden Drücke miteinander vergleicht.

Es wäre hier auch denkbar, die beiden Messtellen M1, M2 nicht miteinander zu verbinden und stattdessen zwei Drucksensoren vorzusehen, die zwei Drucksignale erzeugen, welche dann miteinander verglichen werden.

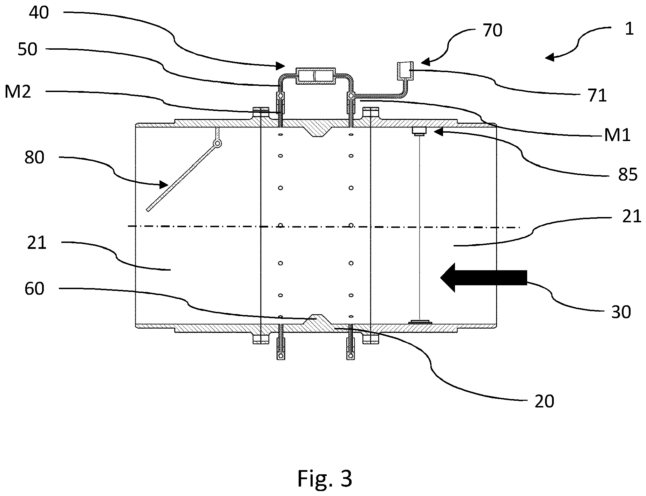

Figur 3 zeigt eine schematische Schnittdarstellung einer Fluidströmungsmesseinrichtung einer weiteren Ausführungsform der vorliegenden Erfindung. Die dargestellte Fluidströmungsmesseinrichtung 1 stimmt weitgehend mit der obigen Ausführungsform überein. Die dargestellte weitere Ausführungsform weist lediglich weitere optionale Einrichtungen bzw. Merkmale auf. So ist die dargestellte Fluidströmungsmesseinrichtung 1 ferner mit einer Störkontur 60 versehen, die zwischen den beiden Messtellen im Inneren des Gehäuses derart vorgesehen ist, dass sie die Strömung bzw. Strömungscharakteristik der durch das Gehäuse 20 geleiteten Strömung beeinflusst, insbesondere verändert. In dem vorliegenden Beispiel ist die Störkontur als eine um den Innenumfang des Gehäuses 20 umgehend verlaufende Rohrverengung ausgebildet. Es wäre jedoch auch denkbar, die Störkontur 60 lediglich als eine kleine Erhebung auszubilden, die lediglich vor einer einzelnen Durchgangsbohrung 22 vorgesehen ist, oder als eine Vielzahl von kleinen Erhebungen auszubilden, die jeweils vor den einzelnen Durchgangsbohrungen 22 der Vielzahl von Durchgangsbohrungen 22 vorgesehen sind. Entsprechend ist es nicht notwendig, die Störkontur 60 um den kompletten Innenumfang des Gehäuses 20 umlaufend vorzusehen.

Die dargestellte Fluidströmungsmesseinrichtung 1 weist ferner eine Blasluftvorrichtung 70 auf, die mit der Messstelle M1, insbesondere der als Ring ausgebildeten Verbindungseinrichtung 50, verbunden ist. Auf diese Weise ist es möglich, die Messstelle M1 nach bestimmten Zeitintervallen mit Druckluft zu versorgen, um die Messtelle M1 von Schmutzpartikeln zu befreien. In der dargestellten Ausführungsform ist lediglich die Messtelle M1 mit einer Blasluftvorrichtung 70 versehen, es können jedoch auch beide Messtellen M1, M2 mit einer Blasluftvorrichtung 70 versehen sein. Um die Versorgung mit Druckluft steuern zu können, ist die Blasluftvorrichtung 70 mit einem Steuerventil versehen, welche die Zufuhr von Druckluft an die Messtelle M1 schließen und öffnen kann.

Zwischen der Verbindungsstelle der Blasluftvorrichtung 70 mit dem Ring der Verbindungseinrichtung 50 und der Sensoreinheit 40 kann ferner ein Sperrventil vorgesehen sein, um die Sensoren der Sensoreinheit 40 vor der Blasluft und somit einer möglichen Schädigung zu schützen.

Des Weiteren weist die dargestellte Fluidströmungsmesseinrichtung 1 eine Volumenstromänderungsvorrichtung 80 auf, welche als mechanisch verstell- und/oder regelbare Durchflussblende ausgebildet ist. In der gezeigten Ausführungsform ist die Durchflussblende 80 in Strömungsrichtung gesehen hinter den beiden Messstellen M1, M2 angeordnet, um die Messstellen M1, M2 strömungsmäßig nicht zu beeinflussen. Mittels der Durchflussblende kann der Durchfluss bzw. die Fluidmenge, der durch das Gehäuse 20 geführten Fluidströmung, gesteuert und/oder geregelt werden.

Ferner zeigt die Figur 3 eine Partikelerfassungsvorrichtung 85, mit welcher die Fluidströmungsmesseinrichtung 1 optional versehen sein kann. Bei der Partikelerfassungsvorrichtung kann es sich um einen optischen Sensor oder um einen Ultraschallsensor handeln. Anhand der Partikelerfassungsvorrichtung kann eine Konzentration der in der Fluidströmung enthaltenen Partikel, insbesondere Verschmutzungspartikel wie Späne, erfasst werden.

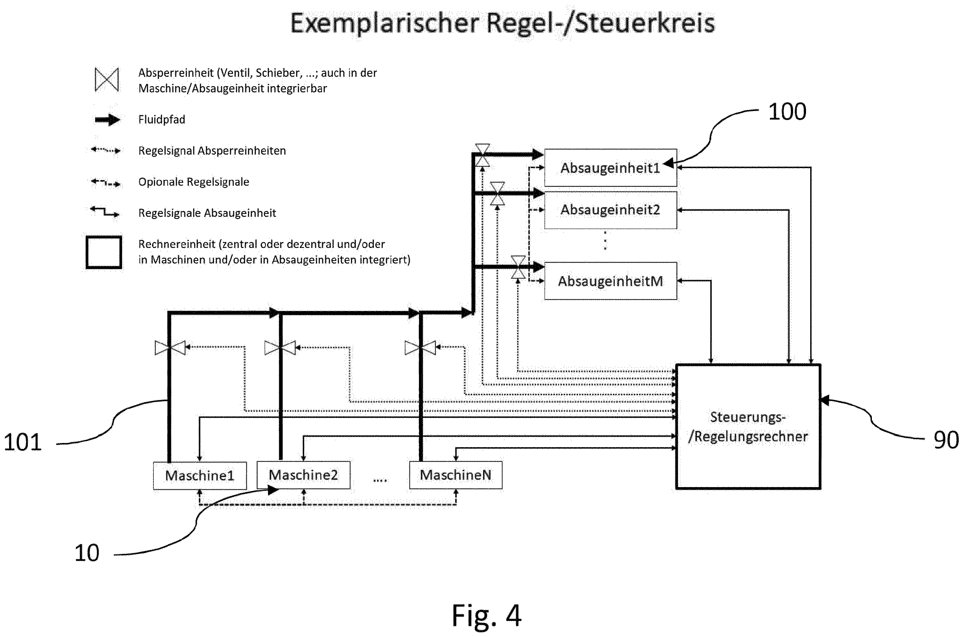

Figur 4 zeigt schematisch den Aufbau einer Steuerungseinrichtung zur Steuerung und/oder Regelung einer Absaugvorrichtung gemäß einer Ausführungsform der vorliegenden Erfindung. In der dargestellten Ausführungsform handelt es sich um eine zentrale Absauganlage einer Fertigungshalle, welche mehrere Bearbeitungsmaschinen 10 mittels mehreren den Bearbeitungsmaschinen 10 zugeordneten Absaugeinheiten bzw. Absaugvorrichtungen 100 mit Absaugluft versorgt. Zur Steuerung und/Regelung der Absauganlage sowie gegebenenfalls der einzelnen Bearbeitungsmaschinen 10 ist eine Steuerungs- und/oder Regelungseinrichtung 90 vorgesehen. In der dargestellten Ausführungsform ist die Steuerungs- und/oder Regelungseinrichtung 90 eine separate Einheit der Absauganlage. Könnte jedoch auch Bestandteil der Fluidströmungsmesseinrichtung 1 oder einer der Bearbeitungsmaschinen 10 sein.

Die Steuerungs- und/oder Regelungseinrichtung 90 ist dazu eingerichtet, mittels eines Ausgangssignals S_{Out}, insbesondere eines Druckdifferenzwertes, der Sensoreinheit 40 einen Volumenstrom V_{Fluid} der gasförmigen Fluidströmung 30 zu ermitteln und/oder mittels eines Ausgangssignals PV_{Out} der Partikelerfassungsvorrichtung 85 einen Erfassungsgrad G_{Verschm} der gasförmigen Fluidströmung zu ermitteln, und basierend auf dem Volumenstrom V_{Fluid} und/oder dem Verschmutzungsgrad G_{Verschm} die gasförmige Fluidströmung 30 zu bewerten.

Hierzu ist in jeden Absaugstrang bzw. Absaugkanal 101 der Absauganlage, welcher jeweils eine Bearbeitungsmaschine 10 mit einer zugehörigen Absaugeinheit 100 verbindet, eine Fluidströmungsmesseinrichtung 1 integriert, mittels welcher die jeweilige Absaugluft bewertet werden kann. Hierunter ist zu verstehen, dass die Durchflussmenge der Fluidströmung 30 und/oder die Partikelkonzentration in der Fluidströmung erfasst wird.

Basierend auf dem ermittelten Volumenstrom V_{Fluid} und/oder dem ermittelten Erfassungsgrad G_{Verschm} kann die Volumenstromänderungsvorrichtung 80 gesteuert und/oder geregelt werden. Im Detail, kann die Steuerungs- und/oder Regelungseinrichtung 90 den ermittelten Volumenstrom V_{Fluid} mit einem voreingestellten Soll-Volumenstrom Soll-V_{Fluid} und/oder den ermittelten Erfassungsgrad G_{Verschm} mit einem voreingestellten Maximal-Erfassungsgrad Max-G_{Verschm} vergleichen, und wenn der ermittelte Volumenstrom V_{Fluid} unterhalb dem Soll-Volumenstrom Soll-V_{Fluid} liegt und/oder der ermittelte Erfassungsgrad G_{Verschm} oberhalb dem Maximal-Verschmutzungsgrad Max-G_{Verschm} liegt, die Steuerungs- und/oder Regelungseinrichtung 90 beispielsweise die Volumenstromänderungsvorrichtung 80 so ansteuern, dass der Volumenstrom der Fluidströmung 30 erhöht wird und/oder die jeweilige Absaugeinheit 100 so ansteuern, dass eine Absaugleistung der Absaugeinheit 100 gesteigert und somit der Volumenstrom der Fluidströmung 30 erhöht wird.

Aus der vorhergehenden Beschreibung erkennt der Fachmann, dass verschiedene Modifikationen und Variationen der Vorrichtung und des Verfahrens der Erfindung durchgeführt werden können, ohne den Umfang der Erfindung zu verlassen.

Ferner wurde die Erfindung in Bezug auf bestimmte Ausführungsformen beschrieben, die jedoch nur zum besseren Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können. Deshalb wird der Umfang der Erfindung durch die folgenden Ansprüche gekennzeichnet.

### Bezugszeichenliste

- 1: Fluidströmungsmesseinrichtung
- 10: Bearbeitungsmaschine
- 20: durchströmtes Gehäuse
- 21: strömungsführender Strang / Absaugstrang
- 30: gasförmige Fluidströmung
- 40: Sensoreinheit
- 50: Strömungsführungseinrichtung / Fluidleitungen
- 60: Blende
- 70: Blasluftvorrichtung
- 80: Volumenstromänderungsvorrichtung
- 85: Partikelerfassungsvorrichtung
- 90: Steuerungs- und/oder Regelungseinrichtung
- 100: Absaugvorrichtung(en)
- 101: Kanal (Absaugkanal)

- M₁: erste Messstelle
- M₂: zweite Messtelle

## Patentansprüche

1. Fluidströmungsmesseinrichtung (1) zur Bewertung einer gasförmigen Fluidströmung, insbesondere einer Absaugströmung oder einer Blasluftströmung, einer Bearbeitungsmaschine (10) zur Bearbeitung von bevorzugt plattenförmigen Werkstücken, welche insbesondere zumindest teilweise aus Holz, Holzwerkstoffen, Holzersatzwerkstoffen, Kunststoff(en), Verbundmaterial(ien) oder dergleichen bestehen, aufweisend:
zumindest ein durchströmtes bevorzugt ringförmiges Gehäuse (20) zum Führen einer gasförmigen Fluidströmung (30), das dazu eingerichtet ist, in einen strömungsführenden Strang, insbesondere Absaugstrang oder Blasluftstrang, einer Bearbeitungsmaschine implementiert zu werden,
zumindest eine Messstelle (M₁, M₂), die an dem durchströmten Gehäuse (20) vorgesehen ist; **dadurch gekennzeichnet, dass** die Fluidströmungsmesseinrichtung
eine außerhalb des durchströmten Gehäuses (20) angeordnete Sensoreinheit (40) zur Erfassung der gasförmigen Fluidströmung (30) mittels der zumindest einen Messstelle (M₁, M₂) aufweist, wobei die Sensoreinheit (40) ein Differenzdrucksensor, ein Flügelradsensor, ein Vortexsensor, ein thermischer Sensor, ein Ultraschallsensor oder zwei Drucksensoren ist,
wobei die zumindest eine Messstelle (M₁, M₂) als Ausnehmung, insbesondere Durchgangsbohrung ausgebildet ist, welche die Innenseite des die gasförmige Fluidströmung führenden Gehäuses (20) mit der Außenseite des Gehäuses (20) verbindet, insbesondere druck- und/oder strömungsführend verbindet, und
die zumindest eine Messstelle (M1, M2) als eine Vielzahl von Ausnehmungen ausgebildet ist, die bevorzugt um den Umfang des Gehäuses (20) verteilt angeordnet sind.

2. Fluidströmungsmesseinrichtung (1) nach Anspruch 1, bei der zumindest zwei in Strömungsrichtung der gasförmigen Fluidströmung in etwa hintereinander angeordnete Messstellen (M1, M2) an dem Gehäuse (20) vorgesehen sind.

3. Fluidströmungsmesseinrichtung (1) nach Anspruch 2, bei welcher
die Sensoreinheit (40) in einer Strömungsführungseinrichtung (50), insbesondere einer Fluidleitung, welche die beiden Messstellen (M₁, M₂), insbesondere die beiden Durchgangsbohrungen, druck- und/oder strömungsführend miteinander verbindet, bevorzugt strömungsführend angeordnet ist, und/oder
bevorzugt in Strömungsrichtung vor der zumindest einen Messtelle (M₁, M₂) oder zwischen den beiden Messstellen (M₁, M₂) im Inneren des Gehäuses (20) eine Störkontur (60) vorgesehen ist, insbesondere eine Engstelle, die dazu dient, die Strömung der Fluidströmung zu beeinflussen, und/oder
beide Messstellen (M₁, M₂) als eine Vielzahl von Ausnehmungen, insbesondere Durchgangsbohrungen, ausgebildet sind, die bevorzugt um den Umfang des Gehäuses (20) verteilt, insbesondere gleichmäßig verteilt, angeordnet und vorzugsweise miteinander verbunden sind.

4. Fluidströmungsmesseinrichtung (1) nach einem der vorhergehenden Ansprüche, ferner aufweisend
eine Blasluftvorrichtung (70), die dazu eingerichtet ist, zumindest eine der zwei Messtellen (M₁, M₂) mit Druckluft zu versorgen, insbesondere an die Ausnehmung, insbesondere Durchgangsbohrung, der jeweiligen Messstelle (M₁, M₂) Druckluft anzulegen, wobei die Druckluft bevorzugt mittels eines Ventils (71) (Steuerventils) zuschaltbar und/oder steuerbar ist, und/oder
eine Volumenstromänderungsvorrichtung (80), insbesondere eine verstell- und/oder regelbare Durchflussblende oder eine verstell- und/oder regelbare Drosselklappe, zur Steuerung und/oder Regelung des Volumenstroms der durch das Gehäuse (20) geführten gasförmigen Fluidströmung, und/oder
eine Partikelerfassungsvorrichtung (85), die dazu eingerichtet ist, die Anzahl und/oder Konzentration der Partikel, die in der durch das Gehäuse (20) geführten gasförmigen Fluidströmung vorhanden sind, zu erfassen.

5. Fluidströmungsmesseinrichtung (1) nach einem der vorhergehenden Ansprüche, ferner aufweisend eine Steuerungs- und/oder Regelungseinrichtung (90), die dazu eingerichtet ist, mittels eines Ausgangssignals (S_{Out}) der Sensoreinheit (40) einen Volumenstrom (V_{Fluid}) der gasförmigen Fluidströmung zu ermitteln und/oder mittels eines Ausgangssignals (PV_{Out}) der Partikelerfassungsvorrichtung (85) einen Erfassungsgrad (G_{Verschm}) der gasförmigen Fluidströmung zu ermitteln, und basierend auf dem Volumenstrom (V_{Fluid}) und/oder dem Verschmutzungsgrad (G_{Verschm}) die gasförmige Fluidströmung zu bewerten, wobei die Steuerungs- und/oder Regelungseinrichtung (90) bevorzugt ferner dazu eingerichtet ist, mittels dem ermittelten Volumenstrom (V_{Fluid}) und/oder dem ermittelten Erfassungsgrad (G_{Verschm}) die Volumenstromänderungsvorrichtung (80) zu steuern und/oder zu regeln, insbesondere entsprechend eines voreingestellten Betriebsmodus, beispielsweise Eco-, Normal- oder High-Modus, zu steuern und/oder zu regeln.

6. Bearbeitungsmaschine (10) zur Bearbeitung von bevorzugt plattenförmigen Werkstücken, welche insbesondere zumindest teilweise aus Holz, Holzwerkstoffen, Holzersatzwerkstoffen, Kunststoff(en), Verbundmaterial(ien) oder dergleichen bestehen, aufweisend zumindest eine Fluidströmungsmesseinrichtung (1) nach einem der vorhergehenden Ansprüche, bei der die Fluidströmungsmesseinrichtung (1) in einen strömungsführenden Strang, insbesondere Absaugstrang und/oder Blasluftstrang der Bearbeitungsmaschine implementiert ist, ferner aufweisend eine Steuerungs- und/oder Regelungseinrichtung (90) zur Steuerung und/oder Regelung der Fluidströmungsvorrichtung (1), wobei die Steuerungs- und/oder Regelungseinrichtung (90) bevorzugt eine Hauptsteuerungseinrichtung der Bearbeitungsmaschine (10) ist, wobei die Steuerungs- und/oder Regelungseinrichtung (90) ferner bevorzugt dazu eingerichtet ist, die ermittelten Werte und/oder Bewertungsergebnisse (E_{Bewert}) zu visualisieren, überwachen, abspeichern und/oder an einen Cloud-Server zu übermitteln.

7. Bearbeitungsmaschine (10) nach Anspruch 6, bei der die Steuerungs- und/oder Regelungseinrichtung (90) dazu eingerichtet ist, den ermittelten Volumenstrom (V_{Fluid}) mit einem voreingestellten Soll-Volumenstrom (Soll-V_{Fluid}) und/oder den ermittelten Erfassungsgrad (G_{Verschm}) mit einem voreingestellten Maximal-Erfassungsgrad (Max-G_{Verschm}) zu vergleichen, und wenn der ermittelte Volumenstrom (V_{Fluid}) unterhalb dem Soll-Volumenstrom (Soll-V_{Fluid}) liegt und/oder der ermittelte Erfassungsgrad (G_{Verschm}) oberhalb dem Maximal-Verschmutzungsgrad (Max-G_{Verschm}) liegt, die Steuerungs- und/oder Regelungseinrichtung (90) zumindest eine Aktion aus der Gruppe: Warnsignal ausgeben, Information und/oder Warninformation an einen Cloud-Server übermitteln, Notabschaltung und/oder Einschalten, Regelsignale an eine Steuerungs- und/oder Regelungseinrichtung einer Absaugvorrichtung (100), Ventile der Absaugvorrichtung und/oder eine Bearbeitungsmaschine senden, Regelsignale an die Volumenstromänderungsvorrichtung (80) senden und dergleichen, ausführt.

8. Bearbeitungsmaschine (10) nach Anspruch 6 oder 7, bei der die Steuerungs- und/oder Regelungseinrichtung (90) dazu eingerichtet ist, basierend auf einem gewählten Betriebsmodus, beispielsweise Eco-, Normal- oder High-Modus, und/oder basierend auf mindestens einem der nachfolgenden Bearbeitungsparameter: Bearbeitungsvorgang, Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Hilfsstoffe und dergleichen, Oberflächengüte, Werkzeugstandzeit, Maschinenparametern und/oder Produktionsparametern einen Soll-Volumenstrom und/oder einen Maximal-Verschmutzungsgrad zu ermitteln.

9. Bearbeitungsmaschine (10) nach einem der vorhergehenden Ansprüche 6 bis 8, bei der die Steuerungs-/Regelungseinrichtung (90) dazu eingerichtet ist, mittels eines Ausgangssignals (S_{Out}) der Sensoreinheit (40) einen Volumenstrom (V_{Fluid}) der gasförmigen Fluidströmung zu ermitteln und/oder mittels eines Ausgangssignals (PV_{Out}) der Partikelerfassungsvorrichtung (85) einen Erfassungsgrad (G_{Verschm}) der gasförmigen Fluidströmung zu ermitteln, und basierend auf dem Volumenstrom (V_{Fluid}) und/oder dem Erfassungsgrad (G_{Verschm}) die gasförmige Fluidströmung zu bewerten.

10. Bearbeitungsmaschine (10) nach Anspruch 9, wobei die Steuerungs-/Regelungseinrichtung (90) ferner dazu eingerichtet ist, mittels dem ermittelten Volumenstrom (V_{Fluid}) und/oder dem ermittelten Erfassungsgrad (G_{Verschm}) und/oder dem Bewertungsergebnis (E_{Bewert}) den Volumenstrom (V_{Fluid}) und/oder eine Absaugleistung (A_{Leistung}) der Absaugvorrichtung und/oder eine Blasluftleistung der Blasluftvorrichtung und/oder eine Bearbeitungsleistung der Bearbeitungsmaschine zu steuern, insbesondere entsprechend eines voreingestellten Betriebsmodus, beispielsweise Eco-, Normal- oder High-Modus, zu steuern und/oder zu regeln.

11. Bearbeitungsmaschine (10) nach Anspruch 9 oder 10, wobei die Fluidströmungsvorrichtung, insbesondere Absaugvorrichtung (100) und/oder Blasluftvorrichtung, zumindest zwei jeweils von einer gasförmigen Fluidströmung durchströmbare Kanäle (101) aufweist, die bevorzugt jeweils einem Absaugstrang einer Bearbeitungsmaschine (10) entsprechen, und in denen jeweils eine Fluidströmungsmesseinrichtung (1) angeordnet/implementiert ist, wobei die Steuerungseinrichtung (90) bevorzugt dazu eingerichtet ist, basierend auf den zumindest zwei ermittelten Volumenströmen (V_{Fluid}_₁, V_{Fluid}_₂) und/oder den zumindest zwei ermittelten Erfassungsgraden (G_{Verschm_1}, G_{Verschm_2}) und/oder den zumindest zwei ermittelten Bewertungsergebnissen (E_{Bewert-1}, E_{Bewert_2)} die Volumenströme (V_{Fluid_1}, V_{Fluid_2}) und/oder Absaugleistungen(A_{Leistung_1}, A_{Leistung_2}) und/oder Blasluftleistungen der Fluidströmungsvorrichtungen, insbesondere Absaugvorrichtungen und/oder Blasluftvorrichtungen, und/oder Bearbeitungsleistungen der Bearbeitungsmaschine(n) zu steuern und/oder zu regeln, insbesondere entsprechend eines voreingestellten Betriebsmodus, beispielsweise Eco-, Normal- oder High-Modus, der jeweiligen Bearbeitungsmaschine zu steuern und/oder zu regeln.

12. Verfahren zur Bewertung und/oder Überwachung einer gasförmigen Fluidströmung einer Bearbeitungsmaschine (10), welche bevorzugt zur Bearbeitung von Werkstücken, welche insbesondere zumindest teilweise aus Holz, Holzwerkstoffen, Holzersatzwerkstoffen, Kunststoff(en), Verbundmaterial(ien) oder dergleichen bestehen, dient, das nachfolgende Schritte aufweist:
Führen einer gasförmigen Fluidströmung (30) durch ein bevorzugt ringförmiges Gehäuse (20), insbesondere eine Absaugfluidströmung und/oder eine Blasluftströmung, einer Bearbeitungsmaschine, und
Erfassen der gasförmigen Fluidströmung mittels einer außerhalb des durchströmten Gehäuses (20) angeordneten Sensoreinheit (40) über zumindest eine am Gehäuse (20) angeordneten Messtelle (M₁, M₂), wobei
die Sensoreinheit (40) ein Differenzdrucksensor, ein Flügelradsensor, ein Vortexsensor, ein thermischer Sensor, ein Ultraschallsensor oder zwei Drucksensoren ist, und wobei die zumindest eine Messstelle (M1, M2) als Ausnehmung ausgebildet ist, welche die Innenseite des die gasförmige Fluidströmung führenden Gehäuses (20) mit der Außenseite des Gehäuses (20) verbindet,
und die zumindest eine Messstelle (M1, M2) als eine Vielzahl von Ausnehmungen ausgebildet ist, die bevorzugt um den Umfang des Gehäuses (20) verteilt angeordnet sind,
wobei die Erfassung bevorzugt mittels der Fluidströmungsmesseinrichtung (1) nach einem der Ansprüche 1 bis 5 erfolgt.

13. Verfahren nach Anspruch 12, ferner aufweisend den Schritt:
Ermitteln eines Volumenstroms (V_{Fluid}) der gasförmigen Fluidströmung basierend auf einem Ausgangssignal (S_{Out}) der Sensoreinheit (40), und/oder
Ermitteln eines Erfassungsgrads (G_{Verschm}) der gasförmigen Fluidströmung basierend auf einem Ausgangssignal (PV_{Out}) einer Partikelerfassungsvorrichtung (85), wobei das Verfahren bevorzugt ferner den Schritt aufweist:
Bewerten der gasförmigen Fluidströmung basierend auf dem Volumenstrom (V_{Fluid}) und/oder dem Erfassungsgrad (G_{Verschm}),
wobei bevorzugt bewertet wird, ob die gasförmige Fluidströmung in einem Normbereich oder einem abnormalen Bereich liegt.

14. Verfahren nach einem der Ansprüche 12 oder 13, bei dem
die Absaugleistung (A_{Leistung}) einer kompletten Absauganlage/Absaugvorrichtung (100) und/oder die Absaugleistung (A_{Leistung})eines Absaugstrangs einer einzelnen Bearbeitungsmaschine (10), und/oder
der Volumenstrom (V_{Fluid}) der kompletten Absauganlage/Absaugvorrichtung (100) und/oder der Volumenstrom (V_{Fluid}) eines Absaugstrangs einer einzelnen Bearbeitungsmaschine (10), und/oder
die Blasluftleistung einer kompletten Blasluftvorrichtung und/oder eines einzelnen Blasluftstrangs einer Bearbeitungsmaschine (10),
und/oder
die Bearbeitungsleistung der Bearbeitungsmaschine (10),
in Abhängigkeit von zumindest einem der nachfolgenden Faktoren gesteuert und/oder reguliert wird:
ermittelter Volumenstrom (V_{Fluid}), ermittelter Erfassungsgrad (G_{Verschm}), Betriebsmodus der einzelnen Bearbeitungsmaschine (10), wie z.B. Eco-, Normal- oder High-Modus, Bearbeitungsparameter: Bearbeitungsvorgang, Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Hilfsstoffe und dergleichen, Oberflächengüte, Werkzeugstandzeit, Maschinenparametern und/oder Produktionsparametern und dergleichen.

## Claims

1. Fluid flow measuring device (1) for evaluating a gaseous fluid flow, in particular an extraction flow or a blown air flow, of a processing machine (10) for processing preferably panel-formed workpieces consisting in particular at least partially of wood, wood-based materials, wood substitute materials, plastic(s), composite material(s) or the like, comprising:
at least one flow-through, preferably annular, housing (20) for conducting a gaseous fluid flow (30) which is configured to be implemented in a flow-conducting line, in particular an extraction line or blown air line of a processing machine,
at least one measuring point (M₁, M₂) which is provided on the flow-through housing (20); **characterised in that** the fluid flow measuring device has a sensor unit (40) arranged outside the housing (20) for measuring the gaseous fluid flow (30) by means of the at least one measuring point (M₁, M₂),
wherein the sensor unit (40) is a differential pressure sensor, an impeller sensor, a vortex sensor, a thermal sensor, an ultrasonic sensor or two pressure sensors,
wherein the at least one measuring point (M₁, M₂) is designed as a recess, in particular a through bore, which connects the inside of the housing (20) conducting the gaseous fluid flow with the outside of the housing (20), in particular in a pressurised and/or flow-conducting manner, and
the at least one measuring point (M₁, M₂) is designed as a plurality of recesses which are preferably distributed around the circumference of the housing (20).

2. Fluid flow measuring device (1) according to claim 1, wherein at least two measuring points (M₁, M₂) arranged approximately one after the other in the direction of flow of the gaseous fluid flow are provided on the housing (20).

3. Fluid flow measuring device (1) according to claim 2, wherein
the sensor unit (40) is arranged, preferably in a flow-conducting manner, in a flow conducting device (50), in particular a fluid line which connects the two measuring points (M₁, M₂), in particular the two through bores, with each other in a pressurised and/or flow-conducting manner, and/or
an interference contour (60) is preferably provided inside the housing (20) before the at least one measuring point (M₁, M₂) in the direction of flow or between the two measuring points (M₁, M₂,), in particular a constriction which serves to influence the flow of the fluid flow, and/or
both measuring points (M₁, M₂) are designed as a plurality of recesses, in particular through bores, which are preferably distributed around the circumference of the housing (20), in particular evenly distributed, and are preferably connected to each other.

4. Fluid flow measuring device (1) according to one of the preceding claims, further comprising
a blown air device (70) which is configured to supply compressed air to at least one of the two measuring parts (M₁, M₂), in particular to apply compressed air to the recess, in particular through bore, of the respective measuring point (M₁, M₂), wherein the compressed air can preferably be switched on and/or controlled by means of a valve (71) (control valve), and/or
a volume flow regulating device (80), in particular an adjustable and/or variable flow orifice or an adjustable and/or variable throttle valve, for controlling and/or regulating the volume flow rate of the gaseous fluid flow conducted through the housing (20), and/or
a particle detection device (85) which is configured to detect the number and/or concentration of particles present in the gaseous fluid flow conducted through the housing (20).

5. Fluid flow measuring device (1) according to one of the preceding claims, further comprising a control and/or regulating device (90) which is configured to determine a volume flow rate (V_{Fluid}) of the gaseous fluid flow by means of an output signal (S_{Out}) of the sensor unit (40) and/or to determine a contamination level (G_{Verschm}) of the gaseous fluid flow by means of an output signal (PV_{Out}) of the particle detection device (85), and to evaluate the gaseous fluid flow on the basis of the volume flow rate (V_{Fluid}) and/or the contamination level (G_{Verschm}), wherein the control and/or regulating device (90) is preferably further configured to control and/or regulate the volume flow regulating device (80) by means of the determined volume flow rate (V_{Fluid}) and/or the determined contamination level (G_{Verschm}), in particular according to a pre-set operating mode, for example Eco, Normal or High mode.

6. Processing machine (10) for processing preferably panel-formed workpieces which consist in particular at least partially of wood, wood-based materials, wood substitute materials, plastic(s), composite material(s) or the like, having at least one fluid flow measuring device (1) according to one of the preceding claims, wherein the fluid flow measuring device (1) is implemented in a flow-conducting line, in particular an extraction line and/or a blown air line of the processing machine, further having a control and/or regulating device (90) for controlling and/or regulating the fluid flow device (1), wherein the control and/or regulating device (90) is preferably a main control device of the processing machine (10), wherein the control and/or regulating device (90) is preferably further configured to visualise, monitor, store and/or transmit to a cloud server the determined values and/or evaluation results (E_{Bewert}).

7. Processing machine (10) according to claim 6, wherein the control and/or regulating device (90) is configured to compare the determined volume flow rate (V_{Fluid}) with a preset target volume flow rate (Soll-V_{Fluid}) and/or to compare the determined contamination level (G_{Verschm}) with a preset maximum contamination level (Max-G_{Verschm}), and if the determined volume flow rate (V_{Fluid}) is below the target volume flow rate (Soll-V_{Fluid}) and/or the determined contamination level (G_{Verschm}) is above the maximum contamination level (Max-G_{Verschm}), the control and/or regulating device (90) carries out at least one action from the group: issue warning signal, transmit information and/or warning information to a cloud server, emergency shutdown and/or switch-on, send control signals to a control and/or regulating device of an extraction device (100), valves of the extraction device and/or a processing machine, send control signals to the volume flow regulating device (80) and the like.

8. Processing machine (10) according to claim 6 or 7, wherein the control and/or regulating device (90) is configured to determine a target volume flow and/or a maximum contamination level based on a selected operating mode, for example Eco, Normal or High mode, and/or based on at least one of the following processing parameters: processing operation, workpiece type, material to be processed, tool type, tool material, process parameters such as feed rate, speed, cutting speed, cutting force, temperature, auxiliary materials and the like, surface quality, tool life, machine parameters and/or production parameters.

9. Processing machine (10) according to one of the preceding claims 6 to 8, wherein the control/regulating device (90) is configured to determine a volume flow rate (V_{Fluid}) of the gaseous fluid flow by means of an output signal (S_{Out}) of the sensor unit (40) and/or to determine a contamination level (G_{Verschm}) of the gaseous fluid flow by means of an output signal (PV_{Out}) of the particle detection device (85), and evaluate the gaseous fluid flow based on the volume flow rate (V_{Fluid}) and/or the contamination level (G_{Verschm}).

10. Processing machine (10) according to claim 9, wherein the control/regulating device (90) is further configured to control the volume flow rate (V_{Fluid}) and/or a suction power (A_{Leistung}) of the extraction device and/or a blown air output of the blown air device and/or a machining capacity of the processing machine by means of the determined volume flow rate (V_{Fluid}) and/or the determined contamination level (G_{Verschm}) and/or the evaluation result (E_{Bewert}), in particular according to a preset operating mode, for example Eco, Normal or High mode.

11. Processing machine (10) according to claim 9 or 10, wherein the fluid flow device, in particular extraction device (100) and/or blown air device, has at least two channels (101), each of which can be flowed through by a gaseous fluid flow, each of which preferably corresponds to an extraction line of a processing machine (10), and in each of which a fluid flow measuring device (1) is arranged/implemented, wherein the control device (90) is preferably configured to control and/or regulate the volume flow rates (V_{Fluid_1,} V_{Fluid_2}) and/or suction powers (A_{Leistung_l}, A_{Leistung_2}) and/or blown air outputs of the fluid flow devices, in particular extraction devices and/or blown air devices, and/or processing capacities of the processing machine(s) based on the at least two determined volume flow rates (V_{Fluid_1}, V_{Fluid_2}) and/or the at least two determined contamination levels (G_{Verschm_1}, G_{Verschm_2}) and/or the at least two determined evaluation results (E_{Bewert_1}, E_{Bewert}_₂), in particular according to a preset operating mode, for example Eco, Normal or High mode, of the respective processing machine.

12. Method for evaluating and/or monitoring a gaseous fluid flow of a processing machine (10) which is preferably used for the processing of workpieces which consist in particular at least partially of wood, wood-based materials, wood substitute materials, plastic(s), composite material(s) or the like, comprising the following steps:
conducting a gaseous fluid flow (30), in particular an extraction fluid flow and/or a blown air flow, through a preferably annular housing (20) of a processing machine, and
measuring the gaseous fluid flow by means of a sensor unit (40) located outside the flow-through housing (20) via at least one measuring part (M₁, M₂) arranged on the housing (20), wherein
the sensor unit (40) is a differential pressure sensor, an impeller sensor, a vortex sensor, a thermal sensor, an ultrasonic sensor or two pressure sensors, and wherein the at least one measuring point (M₁, M₂) is designed as a recess connecting the inside of the gaseous fluid flow housing (20) with the outside of the housing (20),
and the at least one measuring point (M₁, M₂) is designed as a plurality of recesses which are preferably distributed around the circumference of the housing (20),
wherein the measurement is preferably carried out by means of the fluid flow measuring device (1) according to one of the claims 1 to 5.

13. Method according to claim 12, further comprising the step:
determining a volume flow rate (V_{Fluid}) of the gaseous fluid flow based on an output signal (S_{Out}) of the sensor unit (40), and/or
determining a contamination level (G_{Verschm}) of the gaseous fluid flow based on an output signal (PV_{Out}) of a particle detection device (85), wherein the method preferably further comprises the step:
evaluating the gaseous fluid flow based on the volume flow rate (V_{Fluid}) and/or the contamination level (G_{Verschm}),
wherein it is preferably assessed whether the gaseous fluid flow lies within a normal range or an abnormal range.

14. Method according to one of claims 12 or 13, wherein
the suction power of a complete extraction system/extraction device (100) and/or the suction power of an extraction line of an individual processing machine (10), and/or
the volume flow rate (V_{Fluid}) of the complete extraction system/extraction device (100) and/or the volume flow rate (V_{Fluid}) of an extraction line of an individual processing machine (10), and/or
the blown air output of a complete blown air device and/or an individual blown air line of a processing machine (10),
and/or
the processing capacity of the processing machine (10),
is controlled and/or regulated depending on at least one of the following factors:
determined volume flow rate (V_{Fluid}), determined contamination level (G_{Verschm}), operating mode of the individual processing machine (10), for example Eco, Normal or High mode, processing parameters: processing operation, workpiece type, material to be processed, tool type, tool material, process parameters such as feed rate, speed, cutting speed, cutting force, temperature, auxiliary materials and the like, surface quality, tool life, machine parameters and/or production parameters and the like.

## Revendications

1. Dispositif de mesure d'écoulement de fluide (1) pour l'évaluation d'un écoulement de fluide gazeux, en particulier d'un écoulement d'aspiration ou un écoulement d'air de soufflage, d'une machine de traitement (10) pour le traitement de pièces à traiter, de préférence en forme de plaque, qui se composent en particulier au moins partiellement de bois, de matériaux dérivés du bois, de matériaux de substitution du bois, de matière(s) plastique(s), de matériau(x) composite(s) ou similaires, présentant :
au moins un boîtier (20), de préférence annulaire, traversé par un fluide (30) gazeux, qui est conçu de façon à être implémenté dans une branche conductrice de flux, en particulier une branche d'aspiration ou une branche de soufflage d'air, d'une machine de traitement,
au moins un point de mesure (M₁, M₂)qui est prévu au niveau du boîtier (20) traversé ; **caractérisé en ce que** le dispositif de mesure d'écoulement de fluide
présente une unité formant capteur (40) agencée en dehors du boîtier (20) traversé, pour la détection de l'écoulement de fluide (30) gazeux au moyen de l'au moins un point de mesure (M₁, M₂), dans lequel l'unité formant capteur (40) est un capteur de pression différentielle, un capteur de rotor, un capteur de vortex, un capteur thermique, un capteur à ultrasons ou deux capteurs de pression,
dans lequel l'au moins un point de mesure (M₁, M₂) est réalisé sous la forme d'un évidement, en particulier un perçage débouchant qui relie le côté intérieur du boîtier (20) guidant l'écoulement de fluide gazeux au côté extérieur du boîtier (20), en particulier qui les relie en guidant la pression et/ou l'écoulement, et
l'au moins un point de mesure (M1, M2) est réalisé sous la forme d'une pluralité d'évidements qui sont de préférence agencés de manière répartie autour de la périphérie du boîtier (20).

2. Dispositif de mesure d'écoulement de fluide (1) selon la revendication 1, pour lequel au moins deux points de mesure (M1, M2) agencés dans le sens d'écoulement de l'écoulement de fluide gazeux à peu près l'un derrière l'autre sont prévus au niveau du boîtier (20).

3. Dispositif de mesure d'écoulement de fluide (1) selon la revendication 2, pour lequel
l'unité formant capteur (40) dans un dispositif de guidage d'écoulement (50), en particulier d'une conduite de fluide qui relie entre eux les deux points de mesure (M₁, M₂), en particulier les deux perçages débouchants en guidant la pression et/ou l'écoulement, est de préférence agencée en guidant l'écoulement, et/ou
de préférence dans le sens d'écoulement avant l'au moins un point de mesure (M₁, M₂) ou entre les deux points de mesure (M₁, M₂) à l'intérieur du boîtier (20) un contour irrégulier (60) est prévu, en particulier un rétrécissement qui sert à influencer l'écoulement de l'écoulement de fluide, et/ou
les deux points de mesure (M₁, M₂) sont réalisés comme une pluralité d'évidements, en particulier perçages débouchants qui sont agencés répartis, en particulier répartis uniformément, de préférence autour de la périphérie du boîtier (20) et sont de préférence reliés entre eux.

4. Dispositif de mesure d'écoulement de fluide (1) selon l'une quelconque des revendications précédentes, présentant de plus
un dispositif d'air de soufflage (70) qui est conçu afin d'alimenter au moins un des deux points de mesure (M₁, M₂) en air comprimé, en particulier d'appliquer sur l'évidement, en particulier le perçage débouchant, du point de mesure respectif (M₁, M₂) de l'air comprimé, dans lequel l'air comprimé peut être mis en circuit et/ou commandé de préférence au moyen d'une soupape (71) (soupape de commande), et/ou
un dispositif de modification de courant volumique (80), en particulier un limiteur de débit réglable et/ou régulable ou un clapet d'étranglement réglable et/ou régulable, pour la commande et/ou la régulation du courant volumique de l'écoulement de fluide gazeux guidé par le boîtier (20), et/ou
un dispositif de détection de particules (85) qui est conçu afin de détecter le nombre et/ou la concentration des particules qui sont présentes dans l'écoulement de fluide gazeux guidé par le boîtier (20).

5. Dispositif de mesure d'écoulement de fluide (1) selon l'une quelconque des revendications précédentes, présentant de plus un dispositif de commande et/ou de régulation (90) qui est conçu afin de déterminer au moyen d'un signal de sortie (S_{Out}) de l'unité formant capteur (40) un courant volumique (V_{Fluid}) de l'écoulement de fluide gazeux et/ou de déterminer au moyen d'un signal de sortie (PV_{Out}) du dispositif de détection de particules (85) un degré de détection (G_{Verschm}) de l'écoulement de fluide gazeux, et d'évaluer sur la base du courant volumique (V_{Fluid}) et/ou du degré de salissure (G_{Verschm}) l'écoulement de fluide gazeux, dans lequel le dispositif de commande et/ou de régulation (90) est de préférence conçu de plus afin de commander et/ou de réguler au moyen du courant volumique déterminé (V_{Fluid}) et/ou du degré de détection déterminé (G_{Verschm}) le dispositif de modification de courant volumique (80), en particulier de le commander et/ou de le réguler selon un mode de fonctionnement préréglé, par exemple mode Eco, Normal ou High.

6. Machine de traitement (10) pour le traitement de pièces à traiter de préférence en forme de plaque, qui se composent en particulier au moins partiellement de bois, de matériaux dérivés du bois, de matériaux de substitution du bois, de matière(s) plastique(s), de matériau(x) composite(s) ou similaires, présentant au moins un dispositif de mesure d'écoulement de fluide (1) selon l'une quelconque des revendications précédentes, pour laquelle le dispositif de mesure d'écoulement de fluide (1) est implémenté dans une branche guidant l'écoulement, en particulier une branche d'aspiration ou une branche de soufflage d'air de la machine de traitement, présentant de plus un dispositif de commande et/ou de régulation (90) pour la commande et/ou la régulation du dispositif d'écoulement de fluide (1), dans laquelle le dispositif de commande et/ou de régulation (90) est de préférence un dispositif de commande principale de la machine de traitement (10), dans laquelle le dispositif de commande et/ou de régulation (90) est de plus conçu de préférence de façon à visualiser, surveiller, enregistrer les valeurs déterminées et/ou les résultats d'évaluation (E_{Bewert}) et/ou de les transmettre à un serveur Cloud.

7. Machine de traitement (10) selon la revendication 6, pour laquelle le dispositif de commande et/ou de régulation (90) est conçu afin de comparer le courant volumique déterminé (V_{Fluid}) avec un courant volumique de consigne préréglé (Soll-V_{Fluid}) et/ou le degré de détection déterminé (G_{Verschm}) avec un degré de détection maximal préréglé (Max-G_{Verschm}), et si le courant volumique déterminé (V_{Fluid}) se trouve en dessous du courant volumique de consigne (Soll-V_{Fluid}) et/ou le degré de détection déterminé (G_{Verschm}) se trouve au-dessus du degré de salissure maximal (Max-G_{Verschm}), le dispositif de commande et/ou de régulation (90) réalise au moins une action du groupe : émettre un signal d'avertissement, transmettre une information et/ou un avertissement à un serveur Cloud, arrêt d'urgence et/ou mise en marche, envoyer des signaux de régulation à un dispositif de commande et/ou de régulation d'un dispositif d'aspiration (100), des soupapes du dispositif d'aspiration et/ou à une machine de traitement, envoyer des signaux de régulation au dispositif de modification de courant volumique (80) et similaires.

8. Machine de traitement (10) selon la revendication 6 ou la revendication 7, pour laquelle le dispositif de commande et/ou de régulation (90) est conçu afin de déterminer sur la base d'un mode de fonctionnement choisi, par exemple mode Eco, Normal ou High, et/ou sur la base d'au moins un des paramètres de traitement suivants : processus de traitement, type de pièce à traiter, matériau à traiter, type d'outil, matériau d'outil, paramètres de procédé tels qu'avance, vitesse de rotation, vitesse de coupe, force de coupe, température, agents accessoires et similaires, qualité de surface, durée de vie des outils, paramètres machine et/ou paramètres de production un courant volumique de consigne et/ou un degré de salissure maximal.

9. Machine de traitement (10) selon l'une quelconque des revendications précédentes 6 à 8, pour laquelle le dispositif de commande/de régulation (90) est conçu afin de déterminer au moyen d'un signal de sortie (S_{Out}) de l'unité formant capteur (40) un courant volumique (V_{Fluid}) de l'écoulement de fluide gazeux et/ou au moyen d'un signal de sortie (PV_{Out}) du dispositif de détection de particules (85) un degré de détection (G_{Verschm}) de l'écoulement de fluide gazeux, et d'évaluer sur la base du courant volumique (V_{Fluid}) et/ou du degré de détection (G_{Verschm}) l'écoulement de fluide gazeux.

10. Machine de traitement (10) selon la revendication 9, dans laquelle le dispositif de commande/de régulation (90) est de plus conçu afin de commander au moyen du courant volumique déterminé (V_{Fluid}) et/ou du degré de détection déterminé (G_{Verschm}) et/ou du résultat de l'évaluation (E_{Bewert}) le courant volumique (V_{Fluid}) et/ou une puissance d'aspiration (A_{Leistung}) du dispositif d'aspiration et/ou une puissance d'air de soufflage du dispositif d'air de soufflage et/ou une puissance de traitement de la machine de traitement, en particulier de commander et/ou de réguler selon un mode de fonctionnement préréglé, par exemple mode Eco, Normal ou High.

11. Machine de traitement (10) selon la revendication 9 ou la revendication 10, dans laquelle le dispositif d'écoulement de fluide, en particulier le dispositif d'aspiration (100) et/ou le dispositif d'air de soufflage, présente au moins deux canaux (101) pouvant être traversés respectivement par un écoulement de fluide gazeux qui correspondent de préférence respectivement à une branche d'aspiration d'une machine de traitement (10), et dans lesquels respectivement un dispositif de mesure d'écoulement de fluide (1) est agencé/implémenté, dans laquelle le dispositif de commande (90) est de préférence conçu afin de commander et/ou de réguler sur la base des au moins deux courants volumiques déterminés (V_{Fluid_1}, V_{Fluid_2}) et/ou des au moins deux degrés de détection déterminés (G_{Verschm_1}, G_{Verschm_2}) et/ou des au moins deux résultats d'évaluation déterminés (E_{Bewert_1}, E_{Bewert_2}) les courants volumiques (V_{Fluid_1}, V_{Fluid_2}) et/ou les puissances d'aspiration (A_{Leistung_1}, A_{Leistung_2}) et/ou les puissances d'air de soufflage du dispositif d'écoulement de fluide, en particulier des dispositifs d'aspiration et/ou des dispositifs d'air de soufflage, et/ou les puissances de traitement de la/des machine de traitements, en particulier de commander et/ou de réguler selon un mode de fonctionnement préréglé, par exemple mode Eco, Normal ou High, de la machine de traitement respective.

12. Procédé d'évaluation et/ou de surveillance d'un écoulement de fluide gazeux d'une machine de traitement (10) qui sert de préférence au traitement de pièces à traiter qui se composent au moins partiellement de bois, de matériaux dérivés du bois, de matériaux de substitution de bois, de matière(s) plastique(s), de matériau(x) composite(s) ou similaires qui présente les étapes suivantes :
guidage d'un écoulement de fluide (30) gazeux au travers d'un boîtier (20) de préférence annulaire, en particulier un écoulement de fluide d'aspiration et/ou un écoulement d'air de soufflage, d'une machine de traitement, et
la détection de l'écoulement de fluide gazeux au moyen d'une unité formant capteur (40) agencée en dehors du boîtier (20) traversé par le biais d'au moins un point de mesure (M₁, M₂) agencé au niveau du boîtier (20), dans lequel
l'unité formant capteur (40) étant un capteur de pression différentielle, un capteur de rotor, un capteur de vortex, un capteur thermique, un capteur à ultrasons ou deux capteurs de pression, et dans lequel l'au moins un point de mesure (M1, M2) est réalisé sous la forme d'un évidement qui relie le côté intérieur du boîtier (20) guidant l'écoulement de fluide gazeux au côté extérieur du boîtier (20),
et l'au moins un point de mesure (M1, M2) étant réalisé sous la forme une pluralité d'évidements qui sont de préférence agencés de façon répartie autour de la périphérie du boîtier (20),
dans lequel la détection est de préférence effectuée au moyen du dispositif de mesure d'écoulement de fluide (1) selon l'une quelconque des revendications 1 à 5.

13. Procédé selon la revendication 12, présentant de plus l'étape suivante :
la détermination d'un courant volumique (V_{Fluid}) de l'écoulement de fluide gazeux sur la base d'un signal de sortie (S_{Out}) de l'unité formant capteur (40), et/ou
la détermination d'un degré de détection (G_{Verschm}) de l'écoulement de fluide gazeux sur la base d'un signal de sortie (PV_{Out}) d'un dispositif de détection de particules (85), dans lequel le procédé présente de préférence de plus l'étape suivante :
l'évaluation de l'écoulement de fluide gazeux sur la base du courant volumique (V_{Fluid}) et/ou du degré de détection (G_{Verschm}),
dans lequel il est de préférence évalué si l'écoulement de fluide gazeux se trouve dans une plage normale ou une plage anormale.

14. Procédé selon l'une quelconque des revendications 12 ou 13, pour lequel
la puissance d'aspiration (A_{Leistung}) d'une installation d'aspiration complète/d'un dispositif d'aspiration (100) et/ou la puissance d'aspiration (A_{Leistung}) d'une branche d'aspiration d'une machine de traitement (10) individuelle, et/ou
le courant volumique (V_{Fluid}) de l'installation d'aspiration complète/du dispositif d'aspiration (100) et/ou le courant volumique (V_{Fluid}) d'une branche d'aspiration d'une machine de traitement (10) individuelle, et/ou
la puissance d'air de soufflage d'un dispositif d'air de soufflage complet et/ou d'une branche d'air de soufflage individuel d'une machine de traitement (10),
et/ou
la puissance de traitement de la machine de traitement (10),
est commandée et/ou régulée en fonction d'au moins un des facteurs suivants :
courant volumique déterminé (V_{Fluid}), degré de détection déterminé (G_{Verschm}), mode de fonctionnement de la machine de traitement (10) individuelle, tel que mode Eco, Normal ou High, des paramètres de traitement : processus de traitement, type de pièce à traiter, matériau à traiter, type d'outil, matériau d'outil, paramètres de procédé tels qu'avance, vitesse de rotation, vitesse de coupe, force de coupe, température, agents accessoires et similaires, qualité de surface, durée de vie des outils, paramètres machine et/ou paramètres de production et similaires.
